# EUROPEAN PATENT SPECIFICATION

(11) **EP 4 494 946 B1**
(45) Date of publication and mention of the grant of the patent: **01.04.2026**
(21) Application number: 23185850.7
(22) Date of filing: 17.07.2023
(51) Int. Cl.: B60R 3/02

(54) **A FOOTSTEP ASSEMBLY FOR A VEHICLE**
TRITTSTUFENANORDNUNG FÜR EIN FAHRZEUG
ENSEMBLE MARCHEPIED POUR VÉHICULE

(43) Date of publication of application: 22.01.2025
(73) Proprietor: VOLVO TRUCK CORPORATION, 405 08 Göteborg (SE)
(72) Inventor: MAIRE SEBILE, David, 01370 ST ETIENNE DU BOIS (FR); LE GALL, Arthur, 29470 PLOUGASTEL DAOULAS (FR); BERNARD, Denis, 405 08 Göteborg (SE)
(74) Representative: Germain Maureau

(56) References cited:
- CN-A- 104 859 724
- US-A1- 2012 139 206
- US-A1- 2016 252 911
- US-B1- 6 375 207
- US-B2- 7 377 531

## Description

### TECHNICAL FIELD

The disclosure relates generally to a structure helping the passengers of a vehicle to access to the vehicle passenger area. In particular aspects, the disclosure relates to a footstep assembly for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Due to their height, trucks and other heavy vehicles are commonly provided with footsteps to permit to a user to enter the cab or cargo area of the vehicle.

These footsteps are generally mounted on both sides of the cab and may comprise one or several steps. However, these steps are generally spaced apart a large vertical distance from the ground making it physically challenging to climb up and into the vehicle. A user having a small stature or suffering from a physical disability or injury may thus find it impossible to get in and out of such vehicles. A solution to this problem may consist in providing permanent ladders. However, these permanent ladders reduce the overall ground clearance which may impact negatively on the aerodynamics of the vehicle. A footstep assembly according to the preamble of claim 1 is disclosed in US 6 375 207 B1.

### SUMMARY

The invention is defined by the footstep assembly according to claim 1.

Thus configured, the footstep assembly of the disclosure provides an additional step that can be moved from a storage position, in which the step is substantially hidden under an existing sidestep of the vehicle, into an operative position, in which the additional step extends downwardly from the chassis of the vehicle and provides a support for the feet of a passenger that is closer from the ground than the existing sidestep, thus enabling passengers to obtain easy ingress and egress to and from the passenger area. This footstep assembly may advantageously be mounted below an existing sidestep of a conventional truck. The footstep assembly of the disclosure thus provides a simple and cheaper solution to the problem of accessing to the passenger area of a vehicle for a person having a small stature or suffering from a physical disability or injury.

Optionally in some examples, including in at least one preferred example, the at least step comprises a tread, on which one can place a foot, and an extension bracket extending rearward therefrom and the articulated mechanism comprises a parallelogram arrangement comprising two pairs of support links, respectively a first pair of front support links and a second pair of rear support links, the front, respectively the rear, support links being pivotally fixed at their upper ends to the main frame and at their lower ends to the extension bracket.

Optionally in some examples, including in at least one preferred example, the rear support links are fixedly connected to a connecting rod pivotally fixed to the main frame, said connecting rod being rotatably movable about a rotation axis through a motor.

Optionally in some examples, including in at least one preferred example, the motor is electric.

Optionally in some examples, including in at least one preferred example, the footstep assembly further comprises at least one sensor adapted to sense the current position of the at least one step and transmit a corresponding signal to the controller so that the controller stops the actuator when the at least one step is in its storage and/or operative position(s).

According to the invention, the footstep assembly further comprises a magnet adapted to interact with a metallic portion of the articulated mechanism when the at least one step is in its storage position so that the articulated mechanism is kept in its folded state.

Optionally in some examples, including in at least one preferred example, the fastening device comprises a plurality of screws that are received in corresponding holes of the main frame and adapted to be screwed into corresponding threaded holes of the chassis of the vehicle.

Optionally in some examples, including in at least one preferred example, the controller is adapted to be electrically connected to an electronic control unit of the vehicle so as to receive control signals therefrom.

Optionally in some examples, including in at least one preferred example, the controller is adapted to switch the articulated mechanism from its folded state to its unfolded state when it receives a specific control signal from the electronic control unit of the vehicle.

According to a second aspect of the disclosure, the disclosure relates to a vehicle comprising:
- an electronic control unit,
- a cab including at least one cab door and at least one side footstep below said at least one cab door,
- a door sensor adapted to sense an opening/closing state of the at least one cab door and transmit a corresponding signal to the electronic control unit,
- a footstep assembly according to any of the embodiments set forth herein above mounted on the at least one side footstep,
wherein the electronic control unit is adapted to transmit a specific control signal to the controller of the footstep assembly when it receives a signal from the door sensor when the at least one cab door opens, thus moving the at least one step of the footstep assembly from its storage position to its operative position, and/or when the at least one cab door closes, thus moving the at least one step of the footstep assembly from its operative position to its storage position.

Thus configured, the vehicle of the disclosure provides an additional step that can enable passengers to obtain easy ingress and egress to and from the passenger area as soon as the passenger opens/closes the cab door, thus avoiding the need of a specific command unit to actuate by the passenger to position the additional step in its operative/storage position.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a perspective view of a cab of a truck equipped with a footstep assembly according to the present invention, the footstep assembly being shown in its fully retracted state.
**FIG. 2** is an enlarged view of the footstep assembly shown in FIG. 1.
**FIG. 3** is a view similar to FIG. 1, the footstep assembly being shown in its fully extended state.
**FIG. 4** is an enlarged view of the footstep assembly shown in FIG. 3.
**FIG. 5** is a perspective view of a footstep assembly according to one preferred embodiment of the present invention, the footstep assembly being shown in its fully retracted state.
**FIG. 6** is a side view of the footstep assembly illustrated in FIG. 5.
**FIG. 7** is a view similar to FIG. 5, the footstep assembly being shown in its fully extended state.
**FIG. 8** is a side view of the footstep assembly illustrated in FIG. 7.

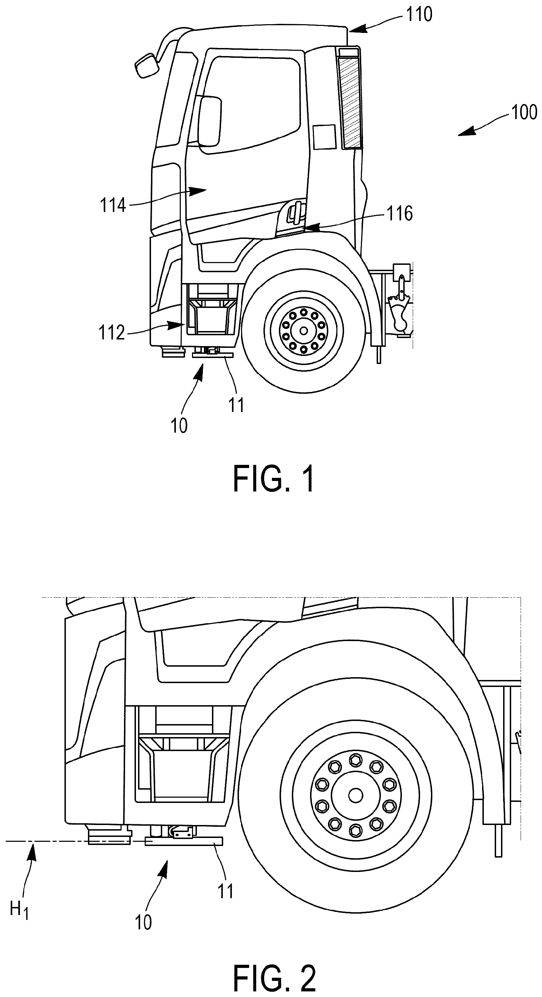

**FIG. 1** shows a cab 110 of a truck 100 provided with a footstep assembly 10 according to the invention. The footstep assembly 10 is mounted below an existing sidestep 112 that is below a cab door 114. The footstep assembly 10 comprises in particular a step 11. The cab door 114 allows a passenger to access to an internal area of the cab 110 when it is opened, for example, when a user acts on a door handle 116. The existing sidestep 112 is however relatively far from the ground, thus making it physically challenging to climb up and into the vehicle for the passenger.

The foot assembly 10 illustrated in FIG. 1, and best seen in **FIG. 2****,** is in a fully retracted state. In this state, the step 11 of the footstep assembly 10 is in a storage position, in which it is aligned in a horizontal plane H1, close to the chassis of the truck 100, the size of the footstep assembly 10 under the chassis of the truck 100 being the lowest possible. However, in this storage position, the step 11 is relatively far from the ground. A passenger wishing to access to the internal area of the cab 110 may thus have the same difficulties to climb up as in a conventional truck.

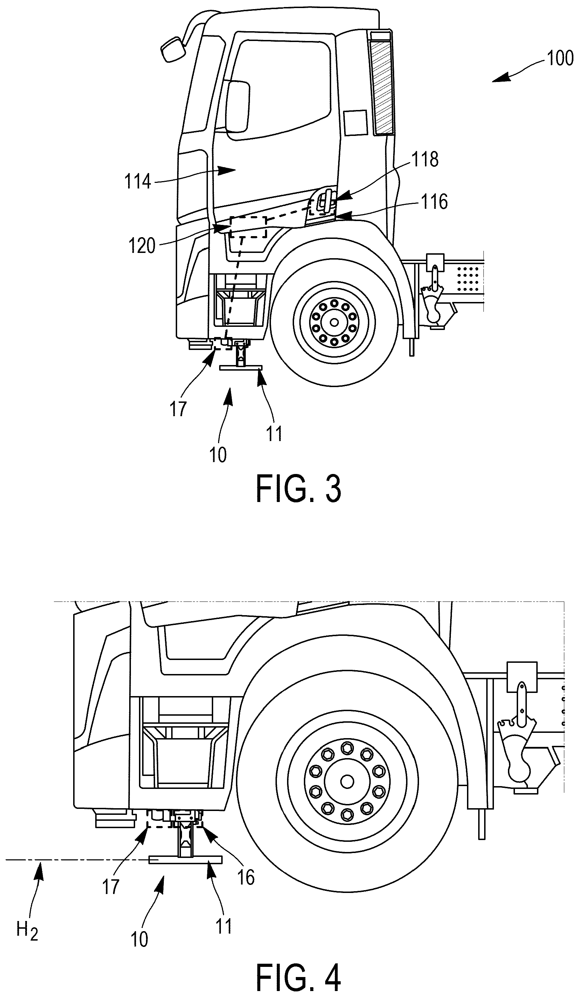

The truck 100 may advantageously comprise a system adapted to transfer the footstep assembly 10 from its fully retracted state to a fully extended state illustrated in **FIG. 3** and **FIG. 4****.**

In this fully extended state, the step 11 of the footstep assembly 10 is in an operative position, in which it is aligned in a horizontal plane H2 that is below the horizontal plane H1 and vertically offset therefrom, thus greatly reducing the distance between the step 11 and the ground. A passenger wishing to access to the internal area of the cab 110 may thus have less difficulties to climb up as in a conventional truck.

The transfer of footstep assembly 10 from its fully retracted state to its fully extended state may be triggered by an action of the passenger on a door handle 116 that is positioned in a lower part of the cab door 114. The passenger may thus act on the door handle 116 to open the cab door 114. This action may be detected by a specific sensor 118 mounted in the cab door 114. The sensor 118 may be electrically connected to an electronic control unit (ECU) 120 of the truck 100 and may thus send a specific signal to the ECU 120 indicating that the cab door 114 has been opened. The ECU 120 is adapted to transmit a specific control signal to a controller 17 integrated in the footstep assembly 10 when it receives said specific signal from the sensor 118. The controller 17 is adapted to control an actuator 16 integrated in the footstep assembly 10 when it receives said specific control signal from the ECU 120, the actuator 16 being configured to move the step 11 from its storage position to its operative position.

In the same way, the transfer of footstep assembly 10 from its fully extended state to its fully retracted state may be triggered by an action of the passenger on a door handle 116 to close the cab door 114. This closure may be detected by the sensor 118. The sensor 118 may thus send a specific signal to the ECU 120 indicating that the cab door 114 has been closed. The ECU 120 is adapted to transmit a specific control signal to the controller 17 when it receives said specific signal from the sensor 118. The controller 17 is adapted to control the actuator 16 when it receives said specific control signal from the ECU 120, the actuator 16 thus moving the step 11 from its operative position to its storage position.

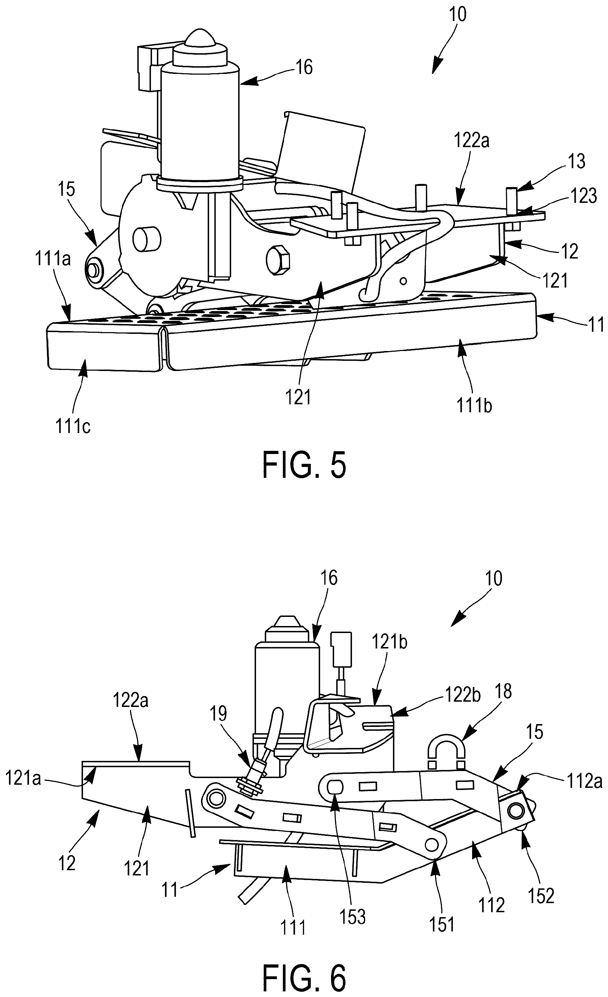

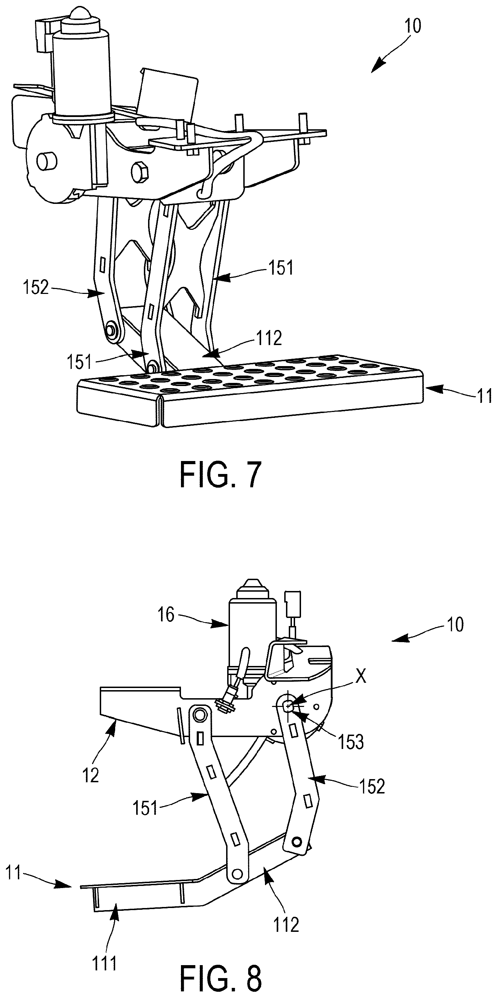

A footstep assembly 10 according to one preferred embodiment of the present invention is respectively illustrated in **FIG. 5** and **FIG. 6****,** in in its fully retracted state, and in **FIG. 7** and **FIG. 8****,** in its fully extended state. The footstep assembly 10 comprises a main frame 12 on which a single step 11 is supported by an articulated mechanism 15, for controlling coordinated movement between a retracted condition, shown in FIGS. 5 and 6, wherein the step 11 is withdrawn just under the frame 12 for storage and a fully extended condition, shown in FIGS. 7 and 8, wherein the step 11 is disposed downwardly from the retracted condition for use.

As shown in FIGS. 5 and 6, the frame 12 basically comprises a pair of vertically extending flat rigid end plates 121, each having respective front and rear upper edges 121a and 121b, supported in spaced facing mirror image relation, the end plates 121 being connected by a front transverse crossbar 122a extending laterally between and fixed at their opposite ends to the respective front upper edges 121a of the end plates 121 and by a rear transverse crossbar 122b extending laterally between and fixed at their opposite ends to the respective rear upper edges 121b of the end plates 121. As will be understood, the frame 12 thereby forms a rigid supporting structure for the step 11 and the articulated mechanism 15 and is adapted to be fixedly mounted to the chassis of a vehicle through a fastening device at any appropriate location at which passenger ingress and egress may be needed, e.g., directly below doorways or directly below an existing sidestep. In the embodiment shown, the fastening device comprises a plurality of screws 13 that are received in corresponding holes 123 of the front transverse crossbar 122a of the main frame 12 and adapted to be screwed into corresponding threaded holes of the chassis of the vehicle. Of course, the particular manner and arrangement of fastening the frame 12 may vary from one vehicle to another as necessary to adapt or conform to the particular structure of a vehicle's chassis. Preferably, the components of the frame 12, as well as the step 11 and the individual links in the articulated mechanism 15, are fabricated of a suitable metal or alloy to provide strength and rigidity, although any other material suitably providing such qualities could be utilized.

The step 11 comprises a horizontally extending tread 111, on which one can place a foot, and an extension bracket 112 extending upward and rearward therefrom. The tread 111 is fabricated as a flat elongate metal plate of rectangular configuration to present an upwardly facing tread surface 111a, with integral front and rear flanges 111b and end brackets 111c extending downwardly in perpendicular relation from the respective edges of the tread surface 111a. As necessary or desirable, the tread surface 111a may be formed or provided with a roughened or otherwise frictional surface to limit possible slippage of a user's feet thereon. The extension bracket 112 is of a generally parallelepiped shape having an upper surface 112a that forms an angle with the tread surface 111a.

The articulated mechanism 15 comprises two identical pairs of individual support links, respectively a first pair of left support links and a second pair of right support links, arranged in spaced mirror-image relation to one another and pivotably interconnected to the extension bracket 112 at opposite sides of the frame 12 and opposite ends of the step 11. For sake of clarity, the articulated mechanism 15 will be described according to one pair of the individual links, as seen in FIGS. 6 and 8, it being understood that an identical mirror-image set of links is provided at the opposite side of the footstep assembly 10.

The articulated mechanism 15 at each side of the footstep assembly 10 comprises a pair of support links 151, 152, respectively a front support link 151 and a rear support link 152, pivotally connected at their upper ends at a horizontal spacing to the inwardly facing surfaces 121c of the end plates 121. The support links 151, 152 extend downwardly and rearward in generally parallel relation and are pivotally connected at their lower ends at a corresponding horizontal spacing to the extension bracket 112. The two pairs of support links 151, 152 in the articulated mechanism 15 are connected with one another to move in unitary coordinated manner by a connecting rod 153 rigidly fixed to each rear support link 152, the connecting rod 153 being pivotally fixed to the end plates 121 of the main frame 12. In particular, the connecting rod 153 may comprise a flat complementary with a flat formed in each rear support link 152, so that each rear support link 152 is integral in rotation with the connecting rod 153. The connecting rod 153 may be rotatably movable about a rotation axis X through a motor 16. In particular, the connecting rod 153 may form the output shaft of the motor 16, or be connected to this output shaft via a series of gears. The motor 16 may advantageously be electrically driven. However, pneumatically driven or hydraulically driven motors may also be used. In an alternative way, any other actuating means adapted to rotatably move the connecting rod 153 may be alternatively used. In this manner, the rear support links 152 act in a coordinated parallelogram-type fashion and, under the action of the motor 16, may switch the articulated mechanism 15 from a folded state, illustrated in FIGS. 5 and 6, to an unfolded state, illustrated in FIGS. 7 and 8.

The operation of the footstep assembly 10 is disclosed in detail in the below paragraphs.

When the articulated mechanism 15 is its folded state as shown in FIGS. 5 and 6, the footstep assembly 10 is in its fully retracted state, corresponding to the storage position of the step 11. This folded state of the articulated mechanism 15 may however be unstable due to the tendency of the support links 151, 152 to move closer to the ground under the effect of their weight. Therefore, to avoid an action of the motor 16 to maintain the rear support links 152 in their positions shown in FIGS. 5 and 6, the footstep assembly 10 may advantageously be provided with a magnet 18 that is adapted to interact with a metallic portion of one rear support link 152 so that the articulated mechanism 15 is kept in its folded state. In a specific embodiment, the rear support links 152 may be totally fabricated of a suitable metal. The magnet 18 may be chosen among a permanent magnet or an electromagnet. In the specific example of an electromagnet, the magnetic field disappears when the current is turned off. Therefore, the retaining action of the magnet 18 may be stopped when the articulated mechanism 15 needs to be transferred in its unfolded state.

The footstep assembly 10 may also comprise one or several sensor(s) 19, for instance an induction sensor, that is adapted to sense the current position of the step 11, in particular when the step 11 is in its storage and/or operative position(s), and transmit a corresponding signal to a controller of the footstep assembly 10. In response to said signal, the controller may control the motor 16 to stop the rotary motion of the connecting rod 153, thus avoiding any deterioration of the articulated mechanism 15 due to excessive folding or unfolding of the support links 151, 152.

Upon application of a torque to the connecting rod 153 through the motor 16, the articulated mechanism 15 begins to pivot forwardly with pivoting movement of the support links 151, 152 and the extension bracket 112 to swing the tread 111 forwardly and downwardly into a horizontal disposition vertically offset from the frame 12. At the completion of such movement, the motor 16 stops applying a torque to the connecting rod 153. This stop may be determined and controlled by the controller based on the signal received from the sensor(s) 19. Following use, the footstep assembly 10 can be retracted from this extended disposition by reversing the described sequence of steps.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A footstep assembly (10) for a vehicle (100), such as a truck, comprising:
- a main frame (12) configured to be coupled on a chassis of the vehicle,
- a fastening device (13) adapted to fasten the main frame (12) to the chassis of the vehicle, preferably directly below an existing sidestep (112) of the vehicle,
- at least one step (11) hingedly connected to the main frame (12) through an articulated mechanism (15), the articulated mechanism (15) having a folded state, in which the at least one step (11) is in a storage position, in which it is aligned in a first horizontal plane (H1), and an unfolded state, in which the at least one step (11) is in an operative position, in which it is aligned in second horizontal plane (H2) that is below the first horizontal plane (H1) and vertically offset therefrom,
- an actuator (16) configured to switch the articulated mechanism (15) between its folded state and its unfolded state,
- a controller (17) adapted to control the actuator (16),
**characterized in that** the footstep assembly (10) further comprises a magnet (18) adapted to interact with a metallic portion of the articulated mechanism (15) when the at least one step (11) is in its storage position so that the articulated mechanism (15) is kept in its folded state.

2. The footstep assembly (10) of claim 1, wherein the at least one step (11) comprises a tread (111), on which one can place a foot, and an extension bracket (112) extending rearward therefrom and the articulated mechanism (15) comprises a parallelogram arrangement comprising two pairs of support links, respectively a first pair of front support links (151) and a second pair of rear support links (152), the front, respectively the rear, support links (151, 152) being pivotally fixed at their upper ends to the main frame (12) and at their lower ends to the extension bracket (112).

3. The footstep assembly (10) of claim 2, wherein the rear support links (152) are fixedly connected to a connecting rod (153) pivotally fixed to the main frame (12), said connecting rod (153) being rotatably movable about a rotation axis (X) through a motor (16).

4. The footstep assembly (10) of claim 3, wherein the motor (16) is electric.

5. The footstep assembly (10) of any of the preceding claims, further comprising at least one sensor (19) adapted to sense the current position of the at least one step (11) and transmit a corresponding signal to the controller (17) so that the controller (17) stops the actuator (16) when the at least one step (11) is in its storage and/or operative position(s).

6. The footstep assembly (10) of any of the preceding claims, wherein the fastening device comprises a plurality of screws (13) that are received in corresponding holes (123) of the main frame (12) and adapted to be screwed into corresponding threaded holes of the chassis of the vehicle (100).

7. The footstep assembly (10) of any of the preceding claims, wherein the controller (17) is adapted to be electrically connected to an electronic control unit (120) of the vehicle (100) so as to receive control signals therefrom.

8. The footstep assembly (10) of claim 7, wherein the controller (17) is adapted to switch the articulated mechanism (15) from its folded state to its unfolded state when it receives a specific control signal from the electronic control unit (120) of the vehicle (100).

9. A vehicle (100) comprising:
- an electronic control unit (120),
- a cab (110) including at least one cab door (114) and at least one side footstep (112) below said at least one cab door (114),
- a door sensor (118) adapted to sense an opening state of the at least one cab door (114) and transmit a corresponding signal to the electronic control unit (120),
- a footstep assembly (10) according to claim 8 mounted on the at least one side footstep (112),
wherein the electronic control unit (120) is adapted to transmit a specific control signal to the controller (17) of the footstep assembly (10) when it receives a signal from the door sensor (118) when the at least one cab door (114) opens, thus moving the at least one step (11) of the footstep assembly (10) from its storage position to its operative position.

## Patentansprüche

1. Trittstufenbaugruppe (10) für ein Fahrzeug (100), wie beispielsweise einen Lkw, umfassend:
- einen Hauptrahmen (12), der so eingerichtet ist, dass er an ein Fahrgestell des Fahrzeugs gekoppelt werden kann,
- eine Befestigungsvorrichtung (13), die so ausgelegt ist, dass sie den Hauptrahmen (12) am Fahrgestell des Fahrzeugs, vorzugsweise direkt unter einer vorhandenen Seitenstufe (112) des Fahrzeugs, befestigt,
- mindestens eine Stufe (11), die durch einen Gelenkmechanismus (15) gelenkig mit dem Hauptrahmen (12) verbunden ist, wobei der Gelenkmechanismus (15) einen eingeklappten Zustand, in dem sich die mindestens eine Stufe (11) in einer Aufbewahrungsposition befindet, in der sie in einer ersten horizontalen Ebene (H1) ausgerichtet ist, und einen ausgeklappten Zustand aufweist, in dem sich die mindestens eine Stufe (11) in einer Betriebsposition befindet, in der sie in der zweiten horizontalen Ebene (H2) ausgerichtet ist, die sich unterhalb der ersten horizontalen Ebene (H1) befindet und von ihr vertikal versetzt ist,
- einen Aktuator (16), der so eingerichtet ist, dass er den Gelenkmechanismus (15) zwischen seinem eingeklappten Zustand und seinem ausgeklappten Zustand umschaltet,
- eine Steuerung (17), die so ausgelegt ist, dass sie den Aktuator (16) steuert,
**dadurch gekennzeichnet, dass** die Trittstufenbaugruppe (10) ferner einen Magneten (18) umfasst, der so ausgelegt ist, dass er mit einem metallischen Abschnitt des Gelenkmechanismus (15) interagiert, wenn sich die mindestens eine Stufe (11) in ihrer Aufbewahrungsposition befindet, sodass der Gelenkmechanismus (15) in seinem eingeklappten Zustand gehalten wird.

2. Trittstufenbaugruppe (10) nach Anspruch 1, wobei die mindestens eine Stufe (11) eine Trittfläche (111), auf die man einen Fuß stellen kann, und eine sich von dort nach hinten erstreckende Erweiterungshalterung (112) umfasst und der Gelenkmechanismus (15) eine Parallelogrammanordnung umfasst, die zwei Paare von Stützgliedern umfasst, jeweils ein erstes Paar vorderer Stützglieder (151) und ein zweites Paar hinterer Stützglieder (152), wobei die vorderen bzw. die hinteren Stützglieder (151, 152) an ihren oberen Enden am Hauptrahmen (12) und an ihren unteren Enden an der Erweiterungshalterung (112) schwenkbar befestigt sind.

3. Trittstufenbaugruppe (10) nach Anspruch 2, wobei die hinteren Stützglieder (152) fest mit einer Verbindungsstange (153) verbunden sind, die schwenkbar am Hauptrahmen (12) befestigt ist, wobei die Verbindungsstange (153) durch einen Motor (16) um eine Drehachse (X) drehbar beweglich ist.

4. Trittstufenbaugruppe (10) nach Anspruch 3, wobei der Motor (16) elektrisch ist.

5. Trittstufenbaugruppe (10) nach einem der vorhergehenden Ansprüche, ferner umfassend mindestens einen Sensor (19), der so ausgelegt ist, dass er die aktuelle Position der mindestens einen Stufe (11) erfasst und ein entsprechendes Signal an die Steuerung (17) überträgt, sodass die Steuerung (17) den Aktuator (16) anhält, wenn sich die mindestens eine Stufe (11) in ihrer Aufbewahrungs- und/oder Betriebsposition(en) befindet.

6. Trittplattenbaugruppe (10) nach einem der vorhergehenden Ansprüche, wobei die Befestigungsvorrichtung eine Vielzahl von Schrauben (13) umfasst, die in entsprechenden Löchern (123) des Hauptrahmens (12) aufgenommen und so ausgelegt sind, dass sie in entsprechende Gewindelöcher des Fahrgestells des Fahrzeugs (100) eingeschraubt werden können.

7. Trittplattenbaugruppe (10) nach einem der vorhergehenden Ansprüche, wobei die Steuerung (17) so ausgelegt ist, dass sie elektrisch mit einer elektronischen Steuereinheit (120) des Fahrzeugs (100) verbunden ist, um Steuersignale davon zu empfangen.

8. Trittstufenbaugruppe (10) nach Anspruch 7, wobei die Steuerung (17) aus ausgelegt ist, dass sie den Gelenkmechanismus (15) von seinem eingeklappten Zustand in seinen ausgeklappten Zustand umschaltet, wenn er ein bestimmtes Steuersignal von der elektronischen Steuereinheit (120) des Fahrzeugs (100) empfängt.

9. Fahrzeug (100), umfassend:
- eine elektronische Steuereinheit (120),
- eine Kabine (110), die mindestens eine Kabinentür (114) und mindestens eine seitliche Trittstufe (112) unterhalb der mindestens einen Kabinentür (114) umfasst,
- einen Türsensor (118), der so ausgelegt ist, dass er einen Öffnungszustand der mindestens einen Kabinentür (114) erfasst und ein entsprechendes Signal an die elektronische Steuereinheit (120) überträgt,
- eine Trittstufenbaugruppe (10) nach Anspruch 8, die an der mindestens einen seitlichen Trittstufe (112) montiert ist,
wobei die elektronische Steuereinheit (120) so ausgelegt ist, dass sie ein bestimmtes Steuersignal an die Steuerung (17) der Trittstufenbaugruppe (10) überträgt, wenn sie ein Signal vom Türsensor (118) empfängt, wenn sich die mindestens eine Kabinentür (114) öffnet, wodurch die mindestens eine Stufe (11) der Trittstufenbaugruppe (10) von ihrer Aufbewahrungsposition in ihre Betriebsposition bewegt wird.

## Revendications

1. Ensemble marchepied (10) pour un véhicule (100), tel qu'un camion, comprenant :
- un cadre principal (12) configuré pour être couplé sur un châssis du véhicule,
- un dispositif de fixation (13) adapté pour fixer le cadre principal (12) au châssis du véhicule, de préférence directement en dessous d'un marchepied latéral existant (112) du véhicule,
- au moins une marche (11) reliée de manière articulée au cadre principal (12) par un mécanisme articulé (15), le mécanisme articulé (15) ayant un état replié, dans lequel l'au moins une marche (11) est dans une position de rangement, dans laquelle elle est alignée dans un premier plan horizontal (H1), et un état déplié, dans lequel l'au moins une marche (11) est dans une position de fonctionnement, dans laquelle elle est alignée dans un second plan horizontal (H2) qui est en dessous du premier plan horizontal (H1) et décalé verticalement par rapport à celui-ci,
- un actionneur (16) configuré pour faire passer le mécanisme articulé (15) entre son état replié et son état déplié,
- un dispositif de commande (17) adapté pour commander l'actionneur (16),
**caractérisé en ce que** l'ensemble marchepied (10) comprend en outre un aimant (18) adapté pour interagir avec une partie métallique du mécanisme articulé (15) lorsque l'au moins une marche (11) est dans sa position de rangement, de sorte que le mécanisme articulé (15) soit maintenu dans son état replié.

2. Ensemble marchepied (10) selon la revendication 1, dans lequel l'au moins une marche (11) comprend une surface de marche (111), sur laquelle on peut placer un pied, et un support d'extension (112) s'étendant vers l'arrière depuis celle-ci et le mécanisme articulé (15) comprend un agencement de parallélogramme comprenant deux paires de bielles d'appui, respectivement une première paire de bielles d'appui avant (151) et une seconde paire de bielles d'appui arrière (152), les bielles d'appui avant, respectivement arrière (151, 152) étant fixées en pivotement au niveau de leurs extrémités supérieures au cadre principal (12) et au niveau de leurs extrémités inférieures au support d'extension (112).

3. Ensemble marchepied (10) selon la revendication 2, dans lequel les bielles d'appui arrière (152) sont reliées de manière fixe à une tige de liaison (153) fixée en pivotement au cadre principal (12), ladite tige de liaison (153) étant mobile en rotation autour d'un axe de rotation (X) par un moteur (16).

4. Ensemble marchepied (10) selon la revendication 3, dans lequel le moteur (16) est électrique.

5. Ensemble marchepied (10) selon l'une des revendications précédentes, comprenant en outre au moins un capteur (19) adapté pour détecter la position actuelle de l'au moins une marche (11) et transmettre un signal correspondant au dispositif de commande (17) de sorte que le dispositif de commande (17) arrête l'actionneur (16) lorsque l'au moins une marche (11) est dans sa/ses position(s) de rangement et/ou de fonctionnement.

6. Ensemble marchepied (10) selon l'une des revendications précédentes, dans lequel le dispositif de fixation comprend une pluralité de vis (13) qui sont reçues dans des trous correspondants (123) du cadre principal (12) et adaptées pour être vissées dans des trous filetés correspondants du châssis du véhicule (100).

7. Ensemble marchepied (10) selon l'une des revendications précédentes, dans lequel le dispositif de commande (17) est adapté pour être relié électriquement à une unité de commande électronique (120) du véhicule (100) afin de recevoir des signaux de commande de celle-ci.

8. Ensemble marchepied (10) selon la revendication 7, dans lequel le dispositif de commande (17) est adapté pour faire passer le mécanisme articulé (15) de son état replié à son état déplié lorsqu'il reçoit un signal de commande spécifique de l'unité de commande électronique (120) du véhicule (100).

9. Véhicule (100) comprenant :
- une unité de commande électronique (120),
- une cabine (110) comprenant au moins une portière de cabine (114) et au moins un marchepied latéral (112) en dessous de ladite au moins une portière de cabine (114),
- un capteur de portière (118) adapté pour détecter un état d'ouverture de l'au moins une portière de cabine (114) et transmettre un signal correspondant à l'unité de commande électronique (120),
- un ensemble marchepied (10) selon la revendication 8 monté sur l'au moins un marchepied latéral (112),
dans lequel l'unité de commande électronique (120) est adaptée pour transmettre un signal de commande spécifique au dispositif de commande (17) de l'ensemble marchepied (10) lorsqu'il reçoit un signal du capteur de portière (118) lorsque l'au moins une portière de cabine (114) s'ouvre, déplaçant ainsi l'au moins une marche (11) de l'ensemble marchepied (10) de sa position de rangement à sa position de fonctionnement.
